# EUROPEAN PATENT APPLICATION

(11) **EP 1 775 575 A1**
(43) Date of publication of application: **18.04.2007**
(21) Application number: 05760160.1
(22) Date of filing: 14.07.2005
(51) Int. Cl.: G01N 21/64

(54) **FLUORESCENCE DETECTING METHOD**

(30) Priority: 16.07.2004 JP 2004210616; 14.06.2005 JP 2005173645
(71) Applicant: FUJIFILM Corporation, Minato-ku Tokyo (JP)
(72) Inventor: NISHIGAKI, Junji c/o FUJIFILM Corporation, Kanagawa 2500123 (JP); KOJIMA, Masayoshi c/o FUJIFILM Corporation, Kanagawa 2500123 (JP); HIRAI, Hiroyuki c/o FUJIFILM Corporation, Kanagawa 2500123 (JP); TAKASHASHI, Tatsuya c/o FUJI FILM Corporation, Kanagawa 2580023 (JP)
(74) Representative: Wiedemann, Peter
(86) International application number: PCT/JP2005/013061
(87) International publication number: WO 2006/009077

(57) **Abstract**

The invention provides a fluorescence detecting method, comprising irradiating an excitation light in the UV range on a sample containing a nanoparticle fluorescent material having an emission half-value width of 50 nm to 200 nm as the fluorescent material and detecting the fluorescence emitted from the sample in the visible range.

## Description

### Technical Field

The invention relates to a fluorescence detecting method, in particular to a fluorescence detecting method of detecting fluorescence emitted from a sample containing a fluorescent material.

### Background Art

Various image-processing systems using a fluorescent material as a labeling substance are known in the field of biochemistry. These image-processing systems may evaluate gene sequences, expression levels of genes, separation and identification of proteins, or molecular weight and properties thereof, by measuring a fluorescent image.

For example, a fluorescent colorant is added to a solution containing plural DNA fragments for processing by electrophoresis, and then, the resulting plural DNA fragments are electrophoresced on a gel support. Alternatively, plural DNA fragments are electrophoresced on a gel support containing a fluorescent colorant. After electrophoresis of the plural DNA fragments on the gel support, the electrophoresced DNA fragments are labeled, for example, by immersion of the gel support in a solution containing a fluorescent colorant. Then, distribution of the DNA fragments on the gel support can be detected by exciting the fluorescent colorant by irradiation of an excitation light and detecting the emitted fluorescence and forming a image.

In the image-processing system described above, by utilizing a fluorescence detection apparatus equipped with an excitation light source and an image sensor such as a CCD (Charge Coupled Device) for detection of fluorescence, a sample containing a fluorescent material is irradiated with an excitation light from the excitation light source and the fluorescence emitted from the sample is detected by the image sensor.

When irradiated with an excitation light, the fluorescent material emits a fluorescent light in a wavelength region longer than the wavelength of the excitation light. Normally, fluorescent materials different in fluorescence wavelength have different excitation wavelengths. Accordingly, when plural fluorescent materials are used in combination, it is necessary to use excitation lights having different wavelengths respectively suitable for the plural fluorescent materials, for improvement in detection sensitivity.

On the other hand, studies in the biochemical and medical research fields demand accurate detection of complicated biological phenomena. Detection systems using plural nanoparticle fluorescent materials have been developed for detection of such phenomena. In particular, detection systems utilizing the size effect of a semiconductor nanoparticle fluorescent material, i.e., changes in fluorescence wavelength according to the particle diameter, have also been developed, in order to prevent increases in the size and complexity of apparatus by the use of plural excitation light sources respectively suitable for plural fluorescent materials (see, for example, Japanese Patent Application Laid-Open (JP-A) No. 2002-28797).

### Disclosure of the Invention

### Problems to be Solved by the Invention

However, in such a detection system by using the size effect of nanoparticle fluorescent material, fluorescence-selecting filters in the number corresponding to the kinds of the fluorescent materials having a different particle diameter are placed to a single excitation light source. Thus, installation of plural fluorescence selection filters for plural nanoparticle fluorescent materials makes a system for detection of plural kinds of target substances more complicated and does not permit easy fluorescence detection. It also demands using fluorescence nanoparticles having a narrow fluorescence wavelength range, which leads to deterioration in detection sensitivity, and use of the filters for fluorescence selection also leads to further deterioration in detection sensitivity.

Accordingly, there exists a need for a fluorescence-detecting method allowing highly-sensitive detection of fluorescence from plural substances present in a sample without use of many kinds of expensive nanoparticles.

There also exists a need for a lower-cost and more simple fluorescence-detecting method enabling fluorescence detection in a transmission apparatus allowing easier separation of the fluorescence from the excitation light.

### Means for Solving the Problems

The invention provides a fluorescence-detecting method, comprising irradiating an excitation light in the UV range on a sample containing a nanoparticle fluorescent material having an emission half-value width of 50 to 200 nm as the fluorescent material and detecting the fluorescence emitted from the sample in the visible range. The UV range above is a range at a wavelength of less than 400 nm, and the visible range is a range at a wavelength of 400 to 800 nm.

A nanoparticle fluorescent material having an emission half-value width of 50 to 200 nm is excited with an excitation light in the UV range and emits a fluorescent light having a broad emission spectrum in the visible range and, thus, fluorescence of a given wavelength in the visible range can be taken out efficiently. Thus in the invention, it is possible to respectively detect fluorescent light from plural substances present in a sample at high sensitivity without using many kinds of expensive nanoparticle and thus to make the fluorescence-detecting method very simple, by using a nanoparticle fluorescent material having an emission half-value width of 50 nm to 200 nm as the fluorescent material.

### Effects of the invention

The fluorescence-detecting method according to the invention allows high-sensitivity detection of fluorescent light from plural substances present in a sample without using many kinds of expensive nanoparticles. It also allows fluorescence detection by using a transmission apparatus in which the excitation light and the fluorescence are easily separated and makes fluorescence detection lower in cost and easier.

### Best Mode for Carrying Out the Invention

Hereinafter, embodiments of the invention will be described in detail with reference to drawings.
Nanoparticle fluorescent material
The nanoparticle fluorescent material according to the invention functions as a fluorescent colorant and emits a fluorescent light having a half-value width of 50 to 200 nm. A nanoparticle fluorescent material of a metal oxide or a metal sulfide surface-modified with a surface modifier is used favorably as the nanoparticle fluorescent material.

### [1] Surface modifier

It is possible to improve the dispersibility of the nanoparticle fluorescent material in water or a hydrophilic solvent and to prevent elution and quenching of fluorescence of the nanoparticle fluorescent material due to biological fluid and the like, by providing the nanoparticle fluorescent material with a surface that is modified with a surface modifier. This also makes a molecular probe for detection of a target molecule bind more easily to the nanoparticle fluorescent material.
Hereinafter, the surface modifier for use in the invention will be described.

The surface modifier for use in the invention is a compound represented by the following General Formula [I] or a decomposition product thereof.

M-(R)₄ General Formula [I]

In the General Formula, M represents a silicon or titanium atom; and R represents an organic group. The groups R may be the same as or different from each other, but at least one group R is a group having reactivity with an affinity molecule.

The group having reactivity with an affinity molecule may have a vinyl, allyloxy, acryloyl, methacryloyl, isocyanato, formyl, epoxy, maleimide, mercapto, amino or carboxyl group, a halogen atom, or the like bound to the main molecule via a connecting group L at its terminal. The group having reactivity with an affinity molecule preferably has an amino group at the terminal.

Examples of the connecting groups L include alkylene groups (linear or cyclic alkylene groups having 1 to 10 carbon atoms, preferably 1 to 8 carbon atoms, such as methylene, ethylene, trimethylene, tetramethylene, hexamethylene, propylene, ethylethylene, cyclohexylene group).

The connecting group L may have an unsaturated bond. Examples of the unsaturated groups include alkenylene group (linear or cyclic groups having 1 to 10 carbon atoms, preferably 1 to 8 carbon atoms, such as vinylene, propenylene, 1-butenylene, 2-butenylene, 2-pentenylene, 8-hexadecenylene, 1,3-butadienylene, and cyclohexenylene) and arylene groups (phenylene groups having 6 to 10 carbon atoms, preferably 6, such as phenylene and naphthylene).

The connecting group L may have one or more heteroatoms (any atoms other than carbon and hydrogen atom such as nitrogen, oxygen, sulfur atom and the like). The heteroatom is preferably an oxygen or sulfur atom, most preferably an oxygen atom. The number of the heteroatoms is not particularly limited, but preferably 5 or less, more preferably 3 or less.

The connecting group L may have a functional group containing a carbon atom close to the above-mentioned heteroatom as its partial structure. Examples of the functional groups include ester groups (including carboxylic ester, carbonic ester, sulfonic ester, and sulfinic ester), amide groups (including carboxylic amide, urethane, sulfonic amide, and sulfinic amide), ether, thioether, disulfide, amino, and imide groups, and the like. The above-mentioned functional group may have a futther substituent group, and L may have plural such functional groups. When L has plural functional groups, the functional groups may be the same as or different from each other.

Favorable examples of the functional groups are ester, amide, ether, thioether, disulfide and amino groups, and more preferable are alkenyl, ester, and ether groups.

The other organic group represented by R may be any group, but is preferably an alkoxy or phenoxy group such as methoxy, ethoxy, isopropoxy, n-propoxy, t-butoxy, or n-butoxy. The alkoxy or phenoxy group may have one or more substituents, and the total number of the substituent groups is preferably 8 or less. The surface modifier for use in the invention may be a salt formed by the amino or carboxyl group thereof with an acid or base.

Examples of the decomposition products of the compound represented by General Formula [I] include hydroxides formed by hydrolysis of alkoxy groups, low-molecular weight oligomers generated in dehydration condensation reaction between the hydroxyl groups (in any structure, linear, cyclic, or crosslinked), dealcoholization condensation reaction products between the hydroxyl groups and unhydrolyzed alkoxy groups, and sol and gel generated by further dehydration condensation reaction thereof.

Typical examples of the surface modifiers include, but are not limited to, N-(2-aminoethyl)-3-aminopropylmethyldimethoxysilane, N-(2-aminoethyl)-3-aminopropyltrimethoxysilane, N-(2-aminoethyl)-3-aminopropyltriethoxysilane, 3-aminopropyltrimethoxysilane, aminophenyltrimethoxysilane, 3-aminopropyltriethoxysilane, bis(trimethoxysilylpropyl)amine, N-(3-aminopropyl)-benzamidotrimethoxysilane, 3-hydrazidopropyltrimethoxysilane, 3-maleimide propyltrimethoxysilane, (p-carboxy)phenyltrimethoxysilane, 3-carboxypropyltrimethoxysilane, 3-aminopropyltitanium tripropoxide, 3-aminopropylmethoxyethyltitanium diethoxide, 3-carboxypropyl titanium trimethoxide.

Instead of the terminal NH₂ or COOH group, the surface modifier for use in the invention may have the salt thereof with an acid or base. In addition, the surface modifier for use in the invention may cover the entire or only partial surface of the mother particle for the nanoparticle fluorescent material. Also in the invention, the surface modifiers may be used alone or in combination of two or more, and may be prepared on the nanoparticle surface.

In addition to the surface modifiers above, a known surface modifier (such as polyethylene glycol, polyoxyethylene (1) laurylether phosphoric acid, laurylether phosphoric acid, trioctylphosphine, trioctylphosphine oxide, sodium polyphosphate, and sodium bis(2-ethylhexyl)sulfosuccinate) may be used in combination during or after preparation of the nanoparticles.

### [2] Nanoparticle fluorescent material of metal oxide or metal sulfide

Examples of the metals in the metal oxide or metal sulfide include elements in group IIB such as Zn, group IIIA such as Y, Eu, and Tb, group IIIB such as Ga and In, group IVA such as Zr and Hf, group IVB such as Si and Ge, group VA such as V and Nb, group VIA such as Mo and W, and the like. The metal is particularly preferably Zn, which is more friendly to the body. The metal oxide may be a complex metal oxide such as Zn₂ SiO₄, CaSiO₃, MgWO₄, YVO₄, or Y₂SiO₅.

The nanoparticle fluorescent material of the metal oxide or metal sulfide may preferably contains an ion of a metal different from that of the metal oxide or the metal sulfide. Examples of the metal ions include ions of Mn, Cu, Eu, Tb, Tm, Ce, Al, Ag, and the like. The metal ion is preferably used as a mixed compound with a chloride or fluoride ion, for doping the metal oxide or metal sulfide. The number of the metal ions to be doped in combination may be one or more. The optimal concentration of the metal ion may vary according to the kind of the metal used in the metal oxide or metal sulfide and the kind of the metal ion, but the metal ion concentration is preferably in the range of 0.001 to 10 atom %, more preferably in the range of 0.01 to 10 atom %.

The emission half-value width of the nanoparticle fluorescent material according to the invention is 50 to 200 nm, but the emission half-value width is preferably 60 to 180 nm, for making the emission detected in a simple apparatus at high sensitivity. In addition, the fluorescent labeled material should have a peak emission wavelength and an peak absorption wavelength different from each other, and for high-sensitivity detection of the emission, the difference between the peak emission wavelength and the wavelength at the absorption terminal close to the emission peak of the nanoparticle fluorescent material of a metal oxide or sulfide according to the invention is preferably 20 nm or more, more preferably 50 nm or more. The nanoparticle fluorescent material having such a peak emission wavelength and a half-value width may be prepared by properly selecting a metal and other components in the metal oxide or sulfide satisfying the condition above.
The nanoparticle fluorescent material according to the invention is preferably easily modified with the surface modifier for use in the invention.

The number-averaged diameter of the nanoparticle fluorescent material according to the invention is preferably 0.5 to 100 nm, more preferably 0.5 to 50 nm, and still more preferably 1 to 10 nm. As for the particle diameter distribution of the nanoparticle fluorescent material, the coefficient of variation is preferably 0 to 50%, more preferably 0 to 20%, and still more preferably 0 to 10%. The coefficient of variation means a value (percentage) calculated by dividing the arithmetic standard deviation by the number-averaged diameter (arithmetic standard deviation × 100/number-averaged diameter).

### [3] Method of producing nanoparticle fluorescent material and dispersion thereof

A nanoparticle fluorescent material of a metal oxide can be prepared by solution phase syntheses including a sol-gel process of hydrolyzing an organic metal such as an alkoxide or acetylacetonate containing the metal to be contained in the fluorescent material, a hydroxide precipitation method of precipitating a metal hydroxide by adding an alkali to an aqueous solution of the metal and dehydrating and annealing the precipitate, an ultrasonic decomposition method of exposing a solution of a metal salt of the metal to ultrasonic waves, a solvothermal method of decomposing the metal salt under high temperature and high pressure, and a spray pyrolysis method of spraying a solution of the metal salt at high temperature. Alternatively, the nanoparticle fluorescent material can be prepared by gas-phase syntheses including a thermal or plasma CVD method using an organic metal compound and a sputtering or laser-ablation method using a target of the metal or the metal oxide.

A nanoparticle fluorescent material of a metal sulfide can be prepared by solution phase syntheses including a hot-soap method of allowing growth of a metal sulfide crystal from a thermally-decomposable metal compound such as a diethyl dithiocarbamate compound containing the metal to be contained in the fluorescent material in a high-boiling point organic solvent such as trialkylphosphine oxide, trialkylphosphine, or ω-aminoalkane, a coprecipitation method of allowing growth of metal sulfide crystal by adding a sulfide solution such as sodium sulfide, ammonium sulfide, or the like to a solution of the metal salt, and a inverted-micelle method of forming an inverted micelle by adding a surfactant to a solution of the metal salt and adding the aqueous raw material solution obtained into a non-polar organic solvent such as an alkane, ether, or aromatic hydrocarbon and thus allowing growth of the metal sulfide crystal in the inverted micelle. The metal sulfide nanoparticle fluorescent material can also be prepared by gas-phase syntheses similarly to those for the metal oxide nanoparticle fluorescent material.

The surface modifier described above may be added to the reaction system during preparation of the nanoparticle fluorescent material, but is preferably added after preparation thereof. The surface modifier hydrolyzes at least a part of the mother particle of the nanoparticle fluorecent material obtained by synthesis to bind to the mother particle so that at least part of the nanoparticle surface (surface modification) is coated. In addition, the mother particle of nanoparticle fluorescent material may be coated with a surface modifier after washing and purification by common methods such as centrifugation and filtration, by dispersing the mother particles in a solvent containing the surface modifier used in the invention (preferably a hydrophilic organic solvent such as methanol, ethanol, isopropyl alcohol, or 2-ethoxyethanol).

The amount of the surface modifier added may vary according to the particle size of fluorescent material, particle concentration, the kind of surface modifier (bulkiness and structure), and others, but the mole number of the surface modifier used is preferably 0.001 to 10 times, more preferably 0.01 to 2 times, greater than that of the metal oxide or sulfide.

As described above, a known surface modifier may be used in combination with the surface modifier represented by General Formula [I]. The mole number of the known surface modifier used is not particularly limited, but is preferably 0.01 to 100 times, more preferably 0.05 to 10 times, greater than that of the metal oxide or sulfide.

The concentration of the nanoparticles in the dispersion of the nanoparticle fluorescent material carrying the surface modifier on the mother particle is not particularly limited, because it varies according to the fluorescence intensity thereof, but preferably 0.01 to 1,000 mM, more preferably 0.1 to 100 mM. Favorable examples of the dispersion media include hydrophilic organic solvents such as alcohols, DMF, DMSO, and THF, and water.

The fact that the surface of the nanoparticle fluorescent material is coated with a surface modifier can be confirmed by presence of a gap between particles by observation of the fluorescent material under a high-resolution TEM such as FE-TEM or by chemical analysis of the fluorescent material.

In the nanoparticle fluorescent material having a coating layer of the surface modifier represented by General Formula [I], a reactive group such as amino or carboxyl, which is a terminal group of the surface modifier may form a covalent bond, for example in amidation reaction, with an affinity molecule such as nucleic acid (monomer, oligonucleotide, etc.), antibody (monoclonal or polyclonal), other protein (amino acid), or polysaccharide so that the reactive group can function as a binding group. As a result, the nanoparticle fluorescent material can function as a fluorescent labeling substance to a particular biological molecule.

Examples of the substances to be labeled are those substances which include antibody, protein, peptide, enzyme substrate, hormone, lymphokine, metabolite, receptor, antigen, hapten, lectin, avidin, streptavidin, toxin, carbohydrate, polysaccharide, nucleic acid, deoxynucleic acid, modified nucleic acid, modified deoxynucleic acid, DNA fragment, RNA fragment, modified DNA fragment, modified RNA fragment, natural drug, virus particle, bacteria particle, virus component, yeast component, blood cell, blood cell component, bacteria, bacteria component, natural or synthetic lipid, pharmaceutical, poison, environmental pollutant, polymer, polymer particle, glass particle, plastic particle, polymer film, and others.

The amidation reaction is performed by condensation between a carboxyl group or the derivative group thereof (ester, acid anhydride, acid halide, or the like) and an amino group. When an acid anhydride or acid halide is used, a base is preferably added to the reaction system. When a methyl or ethyl ester of carboxylic acid is used, the reaction is preferably carried out under heat or reduced pressure for removal of the alcohol generated. When a carboxyl group is amidated directly, a substance accelerating the amidation reaction, for example an amidation reagent such as DCC, Morpho-CDI, or WSC, a condensation additive such as HBT, an active ester reagent such as N-hydroxyphthalimide, p-nitrophenyl trifluoroacetate, or 2,4,5-trichlorophenol, or the like, may be used together with the fluorescent material, or alternatively, particles having a carboxyl group and a labeling compound may be allowed to react separately with an active esterification reagent and then to react with each other in amidation reaction. The amino or carboxyl group of an affinity molecule to be bound to the fluorescent material by amidation is preferably protected with a suitable protecting group according to a common method during the amidation reaction, and deprotected after reaction.

The nanoparticle fluorescent material having the affinity molecule bound thereto by the amidation reaction is washed and purified by a common method such as gel filtration and dispersed in water or a hydrophilic solvent (preferably methanol, ethanol, isopropanol, 2-ethoxyethanol, or the like), and the dispersion obtained is used for fluorescent detection. The concentration of the nanoparticle fluorescent material in the dispersion varies according to the desired fluorescence intensity, and thus is not particularly limited, but preferably 10⁻¹ to 10⁻¹⁵ M, more preferably 10⁻² to 10⁻¹⁰ M.

### [4] Fluorescent colorant

Another fluorescent colorant may be bound directly to the surface of the nanoparticle fluorescent material according to the invention as another functional substance that can bind to a fluorescent material. In such a case, the energy by excitation of the nanoparticle fluorescent material transfers from the fluorescent material to the other fluorescent colorant bound to the surface of the fluorescent material, allowing light emission both from the fluorescent material and the other fluorescent colorant at the same time. The fluorescent colorant for use is preferably a colorant that is excited by the visible light emitted from the nanoparticle fluorescent material and emits fluorescent light in the visible wavelength region, more preferably a colorant having the maximum spectral fluorescence at a wavelength from 400 nm to 800 nm.
Examples of such fluorescent colorants include cyanine colorants (for example, Cy3, Cy5, etc. in CyDye^{™} series products), fluorescein colorants, rhodamine colorants, Alexa colorant series products from Invitrogen, BODIPY colorant series products, Texas Red colorant series products, the azacyanine colorants described as exemplified compounds I-1 to I-74 in WO 01/021624, and the like.

When plural fluorescent colorants are used in combination, these fluorescent colorants preferably have different fluorescence emission wavelengths, for easier detection of the target substance by simultaneous measurement of the fluorescent lights. When the fluorescent colorants are aligned in the order of fluorescence wavelength from the shortest, the difference in the peak wavelength of fluorescence emission between one fluorescent colorant and the next fluorescent colorant is more preferably 15 to 250 nm, and still more preferably 40 to 150 nm.
The fluorescent colorants for use preferably emit a fluorescent light one by one in the direction from short to long wavelength by energy transfer. An example of the combination is a combination of Alexa 488, 546, 594, and 647. The invention is not limited to the combination, and it is possible to perform similar measurement by selecting a first fluorescent colorant and a second fluorescent colorant having an absorption band at a wavelength longer by 15 nm or more than the maximum wavelength in the fluorescent spectrum of the first fluorescent colorant. The third and fourth colorants, if used, are also selected similarly.

The reaction method for forming a bond between the nanoparticle fluorescent material and the fluorescent colorant may vary according to the kind of the fluorescent colorant used, but as with the methods for forming a bond between the nanoparticle fluorescent material and a connected body, is easily selected by persons skilled in the art.

### Fluorescence-detecting method

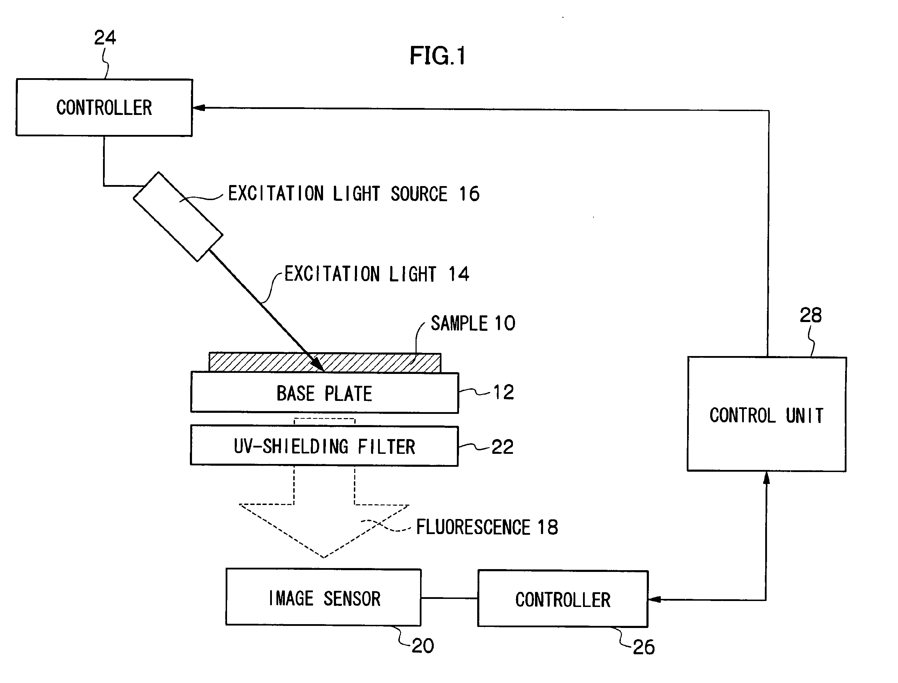

Figure 1 is a schematic diagram showing the configuration of an apparatus for detecting the fluorescence from a sample containing the nanoparticle fluorescent material described above as a fluorescent material by the fluorescence-detecting method according to the invention.
The apparatus has a base plate 12 as a solid-phase carrier carrying a sample 10, an excitation light source 16 for irradiation of excitation light 14 in the UV range on the sample 10, an image sensor 20 such as high-sensitivity CCD camera placed on the side of the base plate 12 opposite to the excitation light source 16 that detects the fluorescence 18 generated in sample 10 in the visible range, and a UV-shielding filter 22 placed between the base plate 12 and the image sensor 20. The apparatus also has a control unit 28 including a personal computer, a controller 24 for the excitation light source 16, and a controller 26 for the image sensor 20; and the excitation light source 16 and the image sensor 20 are electrically connected to and controlled by the control unit 28 respectively via the controllers 24 and 26.

A resin film, a glass plate, or the like transparent to the fluorescence 18 in the visible range generated from the sample 10 (allowing transmission of fluorescence 18) is used for the base plate 12. The base plate preferably does not have an absorption band in the UV range at a wavelength of 250 nm or less. Any one of known resin films may be used as the resin film, but the film preferably has sufficient strength and smooth surface. The resin film is preferably non-fluorescent, for using a fluorescent indicator in DNA analysis.

A film of a high-strength resin, generally called engineering plastic, can be used as a high-strength resin film. For example, any one of the resin films described in "Engineering Plastics (3rd Revised Edition, 1985)" published by The Chemical Daily Co., Ltd. may be used for the base plate 12.

Among the high-strength resin films, particularly favorable for the base plate are cellulose acetate butyrate, cellulose triacetate, cellulose tributyrate, polyacetal, polyamides (including aliphatic polyamides and aromatic polyamides such as aramide), polyamide-imide, polyarylate, polyimide, polyether imide (PEI), polyether ether ketone (PEEK), polyether sulfone (PES), polyethylene terephthalate (PET), polyethylene naphthalate (PEN), polycarbonate, polysulfone (PSF), polystyrene, polycellulose triacetate, polyphenylene sulfide (PPS), polyphenyleneoxide (PPO), polybenzoxazole, amorphous polyacrylate (PAR), and the like.

The non-fluorescent resin film preferably contains no aromatic group in the polymer skeleton, and thus, is preferably, specifically, polymethyl methacrylate, cellulose acetate butyrate, cellulose triacetate, cellulose tributyrate, polyacetal, polyamide, or the like.

Other materials favorable for use as the base plate (solid-phase carrier) include synthetic resins such as epoxy resin, acrylic resin, urethane resin, phenol resin, styrene resin, vinyl resin, polyester resin, poly-amide resin, melamine resin, and formalin resin.

The excitation light source 16 emits an excitation light 14 in the UV range, and a lamp light source having a broad emission spectrum such as ultraviolet lamp is used favorably as the excitation light source 16. A mercury lamp, halogen lamp, or the like may be used as the ultraviolet lamp, but a halogen lamp is particularly preferable from the point of high brightness.

In the apparatus, the excitation light source 16 is driven by the controller 24 according to the control signal from the control unit 28, and an excitation light 14 in the UV range is irradiated on the sample 10 placed on the base plate 12. The nanoparticle fluorescent material contained in the sample 10 as a fluorescent material is excited by irradiation of the excitation light 14, generating a fluorescent light 18 in the visible range. The fluorescent light 18 generated passes through the base plate 12 and the UV-shielding filter 22 and is detected by the image sensor 20. On the other hand, part of the irradiated excitation light 14 passes through the base plate 12, but does not reach the image sensor 20, as it is blocked by the UV-shielding filter 22. Thus, the fluorescence image detected by the sensor 20 is converted into digital data by an analogue/digital (A/D) converting circuit not shown in the Figure, and the data is inputted into the control unit 28 via the controller 26 for image processing.

As described above, because a nanoparticle fluorescent material having a broad emission spectrum is used in the present embodiment, it is possible to detect a fluorescence at any wavelength in the visible range easily at high sensitivity and low cost, without using a laser beam source emitting a light at a single wavelength as the excitation light source.

The excitation light is a light in the UV range, while the fluorescence detected is a light in the visible range. Thus, by placing a UV-shielding filter or the like to the image sensor side of the base plate, it is possible to separate the fluorescent light from the excitation light easily, reduce the amount of background noise, and improve the S/N ratio of the detected signal.

In addition, use of a lamp light source having a broad emission spectrum as the excitation light source enables excitation of plural fluorescent materials with a single excitation light source.

In the embodiment above, described is a configuration wherein a UV-shielding filter is placed between the base plate and the image sensor and the excitation light passing through the base plate is blocked by the UV-shielding filter, but the base plate itself may have a function to block the excitation light. Alternatively, the base plate and the UV-shielding filter may be integrated.

### EXAMPLES

Hereinafter, the invention will be described in more detail with reference to Examples, but it should be understood that the invention is not restricted by these Examples.

### Fluorescence-detection apparatus

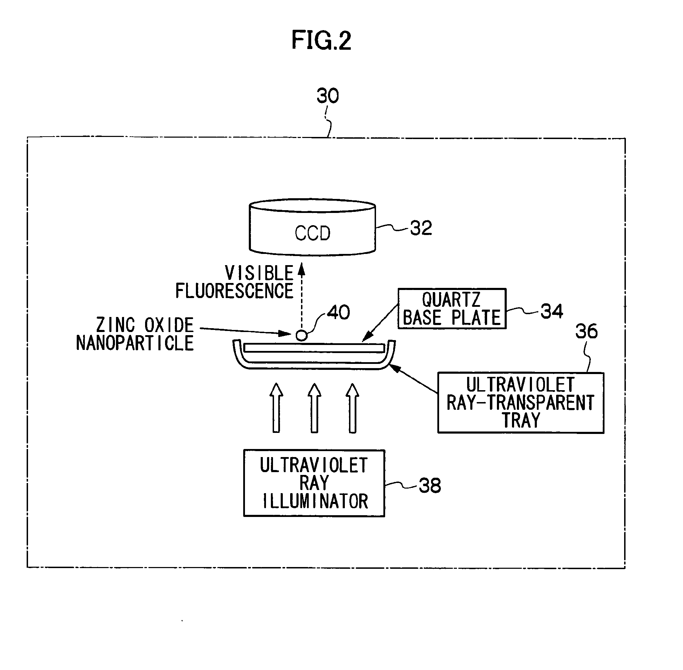

As shown in Figure 2, a Luminor image analyzer "LAS-1000 plus (R)" (manufactured by Fuji Photo Film Co. Ltd.) equipped with a CCD camera 32 and a display (not shown in the Figure) was placed in a dark room 30. An ultraviolet ray-transparent tray 36 was placed immediately below the CCD camera 32. An ultraviolet ray illuminator 38 was placed below the ultraviolet ray-transparent tray 36 at such a position that the ultraviolet ray is irradiated toward the ultraviolet ray-transparent tray 36. The ultraviolet ray illuminator 38 used was "Mini Transilluminatior NTM-10(R)" (manufactured by Funakoshi Co., Ltd.). A ultraviolet ray-transparent base plate 34 was placed on the ultraviolet ray-transparent tray 36, and a fluorescent material (zinc oxide nanoparticle) 40 was supported on the top face of the base plate 34. The image data in the CCD camera 32 was analyzed with image-analyzing software "Image Gauge (R)" (manufactured by Fuji Photo Film Co. Ltd.). The image obtained by the CCD camera 32 was displayed on the display of the Luminor image analyzer.

### Example 1

Preparation of surface-modified metal oxide nanoparticle fluorescent material 8.8 g of zinc acetate dihydrate was dissolved in 400 ml of dehydrated ethanol, and 240 ml of the solvent was distilled off from the solution obtained under reflux at 93°C for 2 hours. 240 ml of dehydrated ethanol was added to the reaction solution obtained, and the mixture was cooled to room temperature. 18 ml of 25 wt % tetramethylammonium hydroxide methanol solution was added to the mixture, and the system obtained was stirred for 30 minutes. 7.2 ml of 3-aminopropyltrimethoxysilane and 2.2 ml of water were added thereto, and the mixture was stirred at 60°C for 4 hours. The white precipitate obtained was filtered, washed with ethanol, and dried.

Analysis of the precipitate by XRD and TEM showed that it was zinc oxide (ZnO) nanoparticles having an average particle diameter of approximately 4 nm. Elemental analysis and IR spectroscopic absorption measurement confirmed that the ZnO nanoparticle had a surface on which the silicon (Si) atoms and aminopropyl groups are bound to each other.

Aqueous dispersions of ZnO nanoparticle different in concentration in the range of 1.0×10⁻⁴ to 1.0× 10⁻⁹ M were prepared by dispersing the precipitate in water, and each dispersion of the ZnO nanoparticle surface-treated with aminopropylsilane was applied dropwise on a quartz base plate having a thickness of 1 mm (25.4 mmx76.2 mm).

Each quartz base plate carrying the droplets of the aqueous dispersion (2 µl) was placed as the base plate 34 on the ultraviolet ray-transparent tray 36 in the apparatus shown in Figure 2, and UV light from the ultraviolet ray illuminator 38 was irradiated on the base plate 34 for 0.5 second, and the fluorescence of the spot was determined with a CCD camera 32. Image analysis showed that it was possible to detect fluorescence at high sensitivity when the concentration of the ZnO nanoparticle is 1.2x 10⁻⁸ M or more. Thus in the invention, it was possible to detect fluorescence at high sensitivity even when the concentration was as low as 1.2×10⁻⁸ M.

### Example 2

### (1) Preparation of nanoparticle and amination of the particle surface (Preparation of ZnO-APS)

Zinc acetate dihydrate (5.49 g, 25 mmol) was added to dehydrated ethanol (250 ml), and the solution obtained was refluxed gently under heat for 2 hours in a Dean-Steark dehydration apparatus, while the solvent was distilled off. The amount of the solvent distilled off was 150 ml. 150 ml of dehydrated ethanol was added to the white turbid reaction solution; the mixture obtained was heated under reflux; and the transparent reaction solution was water-cooled to room temperature.

Tetramethylammonium hydroxide (25% methanol solution, 11.4 ml, 28 mmol) was added to the reaction solution, and the mixture obtained was stirred at room temperature for 15 minutes.

Then, 3-aminopropyltrimethoxysilane (4.7 ml, 25 mmol) and water (1.5 ml, 83.3 mmol) were added to the mixture, and the blend obtained was stirred at 60°C for 4 hours. White solid precipitated 7 minutes after initiation of the reaction. The reaction solution was water-cooled to room temperature, and the solid was filtered under reduce pressure and washed with ethanol. The white powder obtained was dried under reduced pressure, to give surface-aminated zinc oxide nanoparticles. The yield was 6.0 g.
The dispersion of the nanoparticles in solvent thus prepared was transparent even when the content of the nanoparticles in the dispersion is 10 wt %, indicating that the nanoparticles were dispersed favorably in the dispersion. The peak pattern of the nanoparticles obtained corresponded with that of a sample of hexagonal (wurtzite) zinc oxide belonging to powder X-ray diffraction space group P6₃mc, and the particle diameter of the nanoparticles was 3 nm.

### (2) Desaltation

200 mg of the particles above were dissolved in 10 ml of distilled water, and the obtained desalted solution was performed gel filtration by using a column packed with "Sephadex G25(R)". The desalted aqueous solution was used in all reactions below.

### (3) Fluorescence intensity

Water was added to the particles above, to give an aqueous solution having an absorbance of 0.50 at 340 nm. The fluorescence of the aqueous solution was detected in a similar manner to Example 1 and the area of the fluorescence spectrum was determined. For comparison, an aqueous solution of "Q-dot655 biotin conjugate" manufactured by Quantum dot was prepared in a similar manner to that of the aqueous solution of the nanoparticles, and the fluorescence of the aqueous solution was detected, and the area of the fluorescence spectrum was determined. Results are summarized in Table 1.

**[Table 1]**

| Sample | Fluorescence maximum | Area of fluorescence |
|---|---|---|
| ZnO-APS | 536 nm | 10411 |
| Qdot655 | 655 nm | 7413 |

As apparent from Table 1, the fluorescence-detecting method according to the invention using a nanoparticle fluorescent material gives fluorescence stronger than that obtained by the detecting methods using known nanoparticles.

### Example 3

### (1) Preparation of zinc oxide nanoparticles

Dehydrated ethanol (100 ml) was added to zinc acetate dihydrate (2.2 g, 10 mmol), and the mixture was refluxed gently under heat in a Dean-Steark dehydration apparatus for two hours, while the solvent was distilled off. The amount of the solvent distilled off was 60 ml. The white turbid reaction solution wad dehydrated; 60 ml of EtOH was added to the reaction solution; the mixture obtained was heated under reflux; and the transparent reaction solution was water-cooled to room temperature. Tetramethylammonium hydroxide (25% methanol solution, 4.05 ml, 10 mmol) was added to the reaction solution, and the mixture obtained was stirred at room temperature for 4 hours.
Then, 2-(trimethoxysilylethyl)pyridine (2.27 g, 10 mmol) and water (0.55 ml, 30 mmol) were added to the mixture; and the mixture obtained was stirred at 60°C for 4 hours, to give a zinc oxide nanoparticle dispersion.

### (2) Preparation of compound 1

Dehydrated acetonitrile (16 ml) and 3-amino-1-propanol were added to maleic anhydride (1.6 g, 16.3 mmol), and the mixture obtained was stirred at 60°C for 3 hours. After distillation of the solvent, the residue was washed with ethyl acetate, to give a white crystal (2.6 g, yield 93%). The white crystal obtained was dissolved in toluene, and the solution obtained was heated under reflux for 5 hours. The supernatant was distiled away, to give a transparent and colorless liquid (76 mg, yield 17%). The liquid wad dissolved in dichloromethane; the solution obtained was kept at 0°C; and triethylamine (55 mg, 0.5 mmol) and p-toluenesulfonyl chloride (95 mg, 0.5 mmol) were added to the solution. Then, the solution was allowed to warm to room temperature and stirred for 21 hours. The reaction solution was poured into water, and the product was extracted with ethyl acetate. The organic phase was washed with water and saturated saline and dried over the organic phase with magnesium sulfate, and the solvent was distiled. The residue was purified by column chromatography, to give the following compound 1 (78 mg, yield 56%).

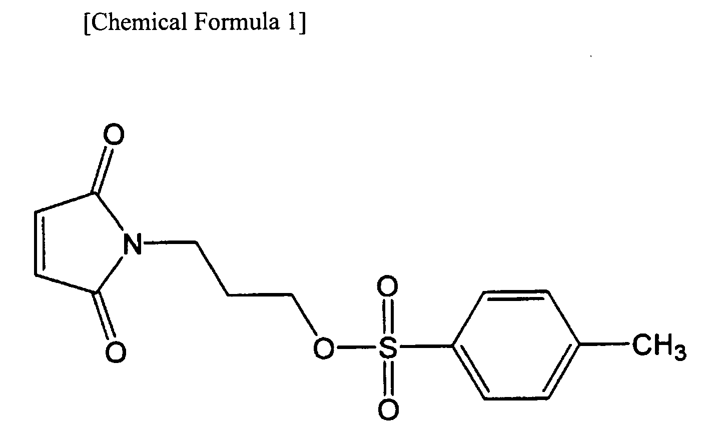

### (3) Preparation of compound 2

Polyethylene glycol 350 monomethylether (5.0 g, 14 mmol) was dissolved in dichloromethane (50 ml); triethylamine (2.4 ml, 17 mmol) and p-toluenesulfonyl chloride (3.0 g, 16 mmol) were added to the solution obtained; and the mixture obtained was stirred at room temperature for 18 hours. After distillation of the solvent, the residue was purified by column chromatography, to give the following compound 2 (6.12 g, yield 87%).

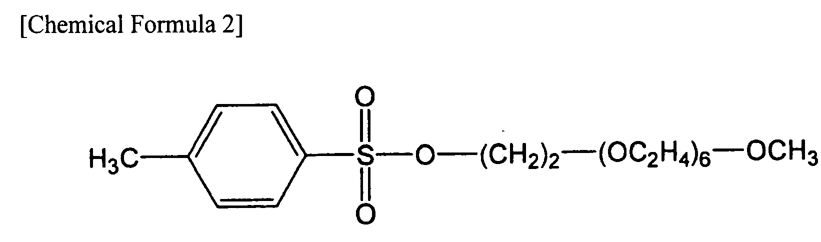

### (4) Surface modification of zinc oxide nanoparticle and binding of colorant to the particle

### 1) Surface modification by compound 1 and bromoacetic acid

The zinc oxide nanoparticle dispersion obtained in step (1) above (3 ml) was placed in a container; after distillation of ethanol from the dispersion, dehydrated acetonitrile (1 ml) and compound 1 (31 mg, 0.1 mmol) were added to the residue obtained; and the mixture obtained was stirred at 60°C for 2 hours. Then, bromoacetic acid (28 mg, 0.2 mmol) was added thereto, and the blend obtained was stirred at 60°C for 1 hour. After distillation of the solvent, the residue was purified by gel filtration column chromatography, to give an aqueous zinc oxide nanoparticle solution. Elemental analysis and IR spectroscopic absorption measurement confirmed that the zinc oxide nanoparticle obtained had a surface having a maleimide group bound thereto.

### 2) Binding of a colorant 1 to the maleimide group

A buffer solution (1 ml, 0.1 M MES, pH 6.6) and the following colorant 1 (1 mg, 1.95 µmol) were added to the nanoparticle dispersion described above (1 ml); and the mixture obtained was stirred at room temperature for 2 hours. Then, the system obtained was purified by gel filtration column chromatography, to give a dispersion of zinc oxide nanoparticles to which the following colorant 1 was bound. The bond of the colorant 1 to the zinc oxide nanoparticle surface was confirmed by elemental analysis and IR spectroscopic absorption measurement.

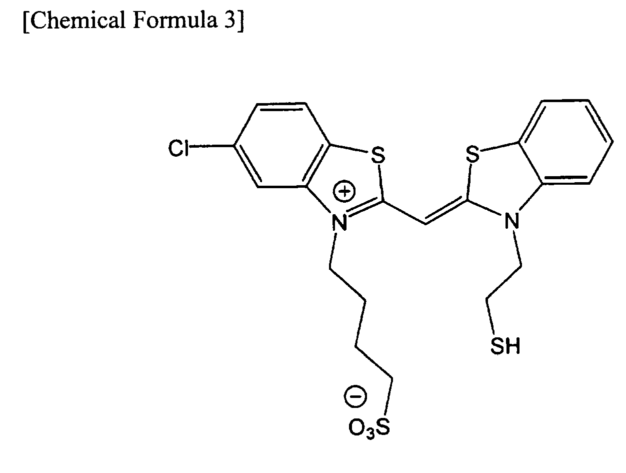

### (5) Surface-modification of zinc oxide nanoparticles with compounds 1 and 2

The zinc oxide nanoparticle dispersion (3 ml) obtained in the step (1) was placed in a container; after distillation of ethanol from the dispersion, dehydrated acetonitrile (1 ml) and the compound 1 (31 mg, 0.1 mmol) were added to the residue; and the mixture obtained was stirred at 60°C for 2 hours. Then, the compound 2 (99 mg, 0.2 mmol) was added to the system obtained, and the resulting mixture was stirred at 60°C for 3 hours. After distillation of the solvent, the residue was purified by gel filtration column chromatography, to give an aqueous zinc oxide nanoparticle solution. Elemental analysis and IR spectroscopic absorption measurement confirmed that the zinc oxide nanoparticle obtained had a surface on which maleimide groups and polyethylene glycol structures formed by elimination of a mesylate group from compound 2 are bound thereto.

### Example 4

### Detection of fluorescence from anti-theophylline antibody-binding surface PEG-modified zinc oxide nanoparticles

### (1) Binding of surface PEG-modified zinc oxide nanoparticle with an anti-theophylline antibody

50 mg of HCl-NH₂-PEG-COOH (MW: 5,000, manufactured by NEKTAR) was dissolved in 0.1 M (pH 8.0) HEPES buffer solution; 5.0 mg of N-(2-maleimidoethyloxy)succinimide was added to the solution obtained; and the mixture was allowed to react at at room temperature for 6 hours. Zinc oxide nanoparticles having an average diameter of 3 nm coated with aminopropylsilane on the surface were dispersed in 0.1 M HEPES (pH 7.0) buffer solution at a concentration of 14 mg/ml. 100 µl of the maleimidated PEG solution and 5 mg of WSC (1-ethyl-3-(3-dimethylaminopropyl)carbodiimide, hydrochloride) were added to 1 ml of the nanoparticle dispersion, and the mixture was allowed to react at room temperature. After 30 minute, 10 mg of CH₃O(CH₂CH₂O)ₙCH₂COOH (average molecular weight: 350) was added to the reaction solution and allowed to react for 6 hours. The product was purified with PD-10 column (Pharmacia Biosciences), to give a dispersion of zinc oxide nanoparticles surface-modified with a PEG containing an introduced maleimide group. The particle had the fluorescence maximum at 460 nm (excitation: 373 nm).
1.5 ml of purified Fab' fraction solution (25 mM, pH 7.2, HEPES buffer solution, 1.6 mg/ml) obtained by digesting an anti-theophylline antibody with pepsin and reducing the product with mercaptoethylamine was mixed with 200 µl of the maleimidated zinc oxide nanoparticle dispersion (10 mg/ml); and the mixture was allowed to react at room temperature overnight. After stirring of the reaction system, the product was purified by gel filtration using Sephadex G100 (elution with 0.1 M HEPES buffer solution at pH 7.4), to give Fab'-connected-PEG-modified zinc oxide nanoparticles.

### (2) Preparation of theophylline-bound quartz base plate and detection of fluorescence nanoparticles

A synthetic quartz base plate (manufactured by Shin-Etsu Chemical) was immersed in aqueous 0.1 % trimethoxyaminopropylsilane (Shin-Etsu Chemical) solution for 1 hour, and the water droplets on the surface was removed with nitrogen gas, to give a surface-aminated quartz base plate. 35 mg of theophylline-8-butanoic acid (manufactured by Sigma), 30 mg of WSC (manufactured by Dojindo Laboratories), and 30 mg of Sulfo-NHS (manufactured by Pierce) were dissolved in 20 ml of DMSO; the aminated quartz base plate was immersed in the solution, allowing reaction at room temperature overnight, to make the theophylline portion bind to the surface covalently. The surface was washed with purified water and dried in air at room temperature. The base plate was used in the following experiments.
The dispersion containing the Fab'-connected-PEG-modified zinc oxide nanoparticle (nanoparticle concentration 1.0× 10⁻⁵ M) and its ten- and hundred-time-dilution solutions were spotted respectively in an amount of 1 µl on the quartz base plate, and after left at room temperature for 30 minutes, it was washed with purified water. The water droplets on the surface were removed; and the fluorescence of each spot was determined by using LAS3000 (Fuji Photo Film) containing an ultraviolet ray LED (excitation light: 365 nm). As a result, fluorescence with strength depending on the nanoparticle concentration was observed. The fluorescence intensity observed on the quartz base plate remained unchanged even when the UV irradiation (5 minutes) was repeated, indicating that it was a fluorescence-detecting reagent superior in light resistance.

### BRIEF DESCRIPTION OF THE DRAWINGS

Figure 1 is a schematic diagram showing the configuration of an apparatus for performing the fluorescence-detecting method according to the invention.
Figure 2 is a schematic diagram showing the configuration of an apparatus used in fluorescence detection in Examples.

## Claims

1. A fluorescence detecting method, comprising irradiating an excitation light in the UV range on a sample containing as a fluorescent material a nanoparticle fluorescent material having an emission half-value width of 50 nm to 200 nm and detecting fluorescence emitted from the sample in the visible range.

2. The fluorescence detecting method of Claim 1, wherein the nanoparticle fluorescent material is a metal oxide or metal sulfide that has been surface modified with a surface modifier that is a compound represented by the following General Formula (I) or a decomposition product thereof:
M-(R)₄ [I]
wherein M represents a silicon or titanium atom; R represents an organic group; and each R may be the same as or different from each other but at least one R is a group reactive with an affinity molecule.

3. The fluorescence detecting method of Claim 1, wherein the nanoparticle fluorescent material has a binding portion that binds to another molecule.

4. The fluorescence detecting method of Claim 2, wherein the nanoparticle fluorescent material has a binding portion that binds to another molecule.

5. The fluorescence detecting method of Claim 1, comprising irradiating an excitation light on the sample held on a base plate that transmits the fluorescence, and detecting the fluorescence passing through the base plate.

6. The fluorescence detecting method of Claim 2, comprising irradiating an excitation light on the sample held on a base plate that transmits the fluorescence, and detecting the fluorescence passing through the base plate.

7. The fluorescence detecting method of Claim 3, comprising irradiating an excitation light on the sample held on a base plate that transmits the fluorescence and detecting the fluorescence passing through the base plate.

8. The fluorescence detecting method of Claim 5, wherein the base plate has a function of blocking the excitation light.

9. The fluorescence detecting method of Claim 6, wherein the base plate has a function of blocking the excitation light.

10. The fluorescence detecting method of Claim 7, wherein the base plate has a function of blocking the excitation light.

11. The fluorescence detecting method of Claim 5, wherein a member for blocking the excitation light is formed at at least one side of the base plate.

12. The fluorescence detecting method of Claim 6, wherein a member for blocking the excitation light is formed at at least one side of the base plate.

13. The fluorescence detecting method of Claim 7, wherein a member for blocking the excitation light is formed at at least one side of the base plate.

14. The fluorescence detecting method of Claim 8, wherein the base plate does not have an absorption band in the UV range at a wavelength of 250 nm or less.

15. The fluorescence detecting method of Claim 9, wherein the base plate does not have an absorption band in the UV range at a wavelength of 250 nm or less.

16. The fluorescence detecting method of Claim 10, wherein the base plate does not have an absorption band in the UV range at a wavelength of 250 nm or less.

17. The fluorescence detecting method of Claim 1, wherein an excitation light in the UV range is irradiated from a lamp light source.

18. The fluorescence detecting method of Claim 2, wherein an excitation light in the UV range is irradiated from a lamp light source.

19. The fluorescence detecting method of Claim 3, wherein an excitation light in the UV range is irradiated from a lamp light source.

20. The fluorescence detecting method of Claim 5, wherein an excitation light in the UV range is irradiated from a lamp light source.
